# EUROPEAN PATENT APPLICATION

(11) **EP 1 519 263 A2**
(43) Date of publication of application: **30.03.2005**
(21) Application number: 04022994.0
(22) Date of filing: 28.09.2004
(51) Int. Cl.: G06F 3/14, G09G 5/00

(54) **Image output apparatus, image output method, and image display system**

(30) Priority: 29.09.2003 JP 2003338071
(71) Applicant: Pioneer Corporation, Tokyo-to (JP)
(72) Inventor: Ogawa, Masakazu Pioneer Corporation, Tokorozawa-shi Saitama-ken (JP); Inotani, Hirokazu Pioneer Corporation, Tokorozawa-shi Saitama-ken (JP); Hashimoto, Shigeru Pioneer Corporation, Tokorozawa-shi Saitama-ken (JP); Tsuneshige, Takashi Pioneer Corporation, Tokorozawa-shi Saitama-ken (JP)
(74) Representative: Tappe, Hartmut

(57) **Abstract**

A DVD reproduction apparatus (10) which is connected to the HDMI monitor (40) that displays image information and which outputs the image information to the HDMI monitor (40) , is provided with: the CPU (17) which acquires conditions information indicating display conditions of the HDMI monitor (40) from the HDMI monitor (40) in advance; the information conversion section (14) which converts the image information to be outputted to the HDMI monitor (40) based on the conditions information; and the HDMI sending section (15) which outputs the image information converted by the information conversion section (14), to the HDMI monitor (40).

## Description

### BACKGROUND OF THE INVENTION

### 1. Field of the Invention

The present invention relates to an image output apparatus for outputting images such as static images and dynamic images, an image output method, an image display system, and an information recording medium on which an image output program is computer-readably recorded.

### 2. Related Art

Image output apparatuses such as a DVD (digital versatile disc) reproduction apparatus have been known. Such image output apparatuses are usually connected to a display apparatus such as a monitor display apparatus and a television receiver to output image information such as static images and dynamic images.

A user of such an image output apparatus and such a display apparatus manually changes settings for display conditions such as an aspect ratio every time he or she changes connection between the image output apparatus and the display apparatus, and thereby the display apparatus can display image information properly. For example, the user may manually make settings for display conditions of the display apparatus with the use of an interface such as GUI (graphical user interface) .

However, in such a prior-art image output apparatus, it is necessary, every time the display apparatus to be connected to the image output apparatus is changed, to change the settings for display conditions for outputting an image to the display apparatus, and therefore the user has to manually set the display conditions each time. It is troublesome and inconvenient for the user to change the display conditions each time. Furthermore, sufficient knowledge about the display apparatus is required for setting the display conditions, and user's manual or the like for the display apparatus is usually required for the setting. Without the user' s manual, it is often impossible to make adequate settings for the display conditions.

### SUMMARY OF THE INVENTION

Accordingly, one example of the problems to be solved by the present invention is to solve the inconvenience in changing settings for display conditions caused in the above-mentioned prior-art technique. To solve the problem, there is provided a novel image output apparatus, an image output method, an image display system, a recording medium, and an image output program, and there is also provided an image output apparatus which outputs image information in accordance with optimum display conditions.

The present invention will be described below. Although reference numerals in the accompanying drawings will be accessorily written as parenthetic numerals for descriptive convenience, the present invention is not limited to the illustrated features.

The above obj ect of the present invention can be achieved by an image output apparatus (10) which is connected to a display apparatus (40) that displays image information and which outputs the image information to the display apparatus (40), provided with: an acquisition device (17) which acquires conditions information indicating display conditions of the display apparatus (40) from the display apparatus (40) in advance; a conversion device (14) which converts the image information to be outputted to the display apparatus (40) based on the conditions information; and an output device (15) which outputs the image information converted by the conversion device (14), to the display apparatus (40).

The above obj ect of the present invention can be achieved by an image display system (100) comprising a display apparatus (40) which displays image information and an image output apparatus (10) which is connected to the display apparatus (40) and which outputs the image information to the display apparatus (40) , providedwith: an acquisition device (17) which acquires conditions information indicating display conditions of the display apparatus (40) from the display apparatus (40) in advance; a conversion device (14) which converts the image information to be outputted to the display apparatus (40) based on the conditions information; and an output device (15) which outputs the image information converted by the conversion device (14), to the display apparatus (40), wherein the display apparatus (40) displays the image information in accordance with the converted image information outputted from the image output apparatus (10).

The above object of the present invention can be achieved by an image output method which outputs image information to a display apparatus (40) which displays the image information, provided with: an acquisition process which acquires conditions information indicating display conditions of the display apparatus (40) from the display apparatus (40) in advance; a conversion process which converts the image information to be outputted to the display apparatus (40) based on the conditions information; and an output process which outputs the image information converted by the conversion process, to the display apparatus (40).

The above obj ect of the present invention can be achieved by an information recording medium in which an image output program is recorded so that it can be read by a computer included in an image output apparatus (10) which is connected to a display apparatus (40) that displays image information and which outputs the image information to the display apparatus (40), wherein the image output program causes the computer to function as: an acquisition device (17) which acquires conditions information indicating display conditions of the display apparatus (40) from the display apparatus (40) in advance; a conversion device (14) which converts image information to be outputted to the display apparatus (40) based on the conditions information; and an output device (15) which outputs the image information converted by the conversion device (14), to the display apparatus (40).

The above obj ect of the present invention can be achieved by an image output control apparatus (80) which controls an image output apparatus (10) which is connected to a display apparatus (40) that displays image information and which outputs the image information to the display apparatus (40), provided with: an acquisition device (817) which acquires conditions information indicating display conditions of the display apparatus (40) from the display apparatus (40) in advance; and a conversion control device (817) which causes the image information, which is to be outputted to the display apparatus (40), to be converted based on the conditions information.

The above obj ect of the present invention can be achieved by an image output control method which controls an image output apparatus (10) which is connected to a display apparatus (40) that displays image information and which outputs the image information to the display apparatus (40), provided with: an acquisition process which acquires conditions information indicating display conditions of the display apparatus (40) from the display apparatus (40) in advance; and a conversion control process which causes the image information, which is to be outputted to the display apparatus (40), to be converted based on the conditions information.

The above obj ect of the present invention can be achieved by an information recording medium in which an image output control program is recorded so that it can be read by a computer included in an image output control apparatus (80) that controls an image output apparatus (10) which is connected to a display apparatus (40) that displays image information and which outputs the image information to the display apparatus (40), wherein the image output program causes the computer to function as: an acquisition device (817) which acquires conditions information indicating display conditions of the display apparatus (40) from the display apparatus (40) in advance; and a conversion control device (817) which causes image information, which is to be outputted to the display apparatus (40), to be converted based on the conditions information.

### BRIEF DESCRIPTION OF THE DRAWINGS

FIG. 1 is a block diagram showing the general configuration of a DVD image display system of a first embodiment according to the present invention;
FIG. 2 shows the detailed configuration of members constituting the DVD image display system of the first embodiment according to the present invention;
FIG. 3 shows the configuration of an EDID data structure sent from an HDMI monitor to a DVD reproduction apparatus 10 in the DVD image display system of the first embodiment;
FIG. 4 shows an example of display conditions to be displayed in GUI on the HDMI monitor in the DVD image display system of the first embodiment;
FIG. 5 is a flowchart showing the operation of an image output processing in the DVD image display system of the first embodiment;
FIG. 6 is a flowchart showing the operation of the image output processing performed when connection between the DVD reproduction apparatus and the HDMI monitor is cut in the DVD image display system of the first embodiment; and

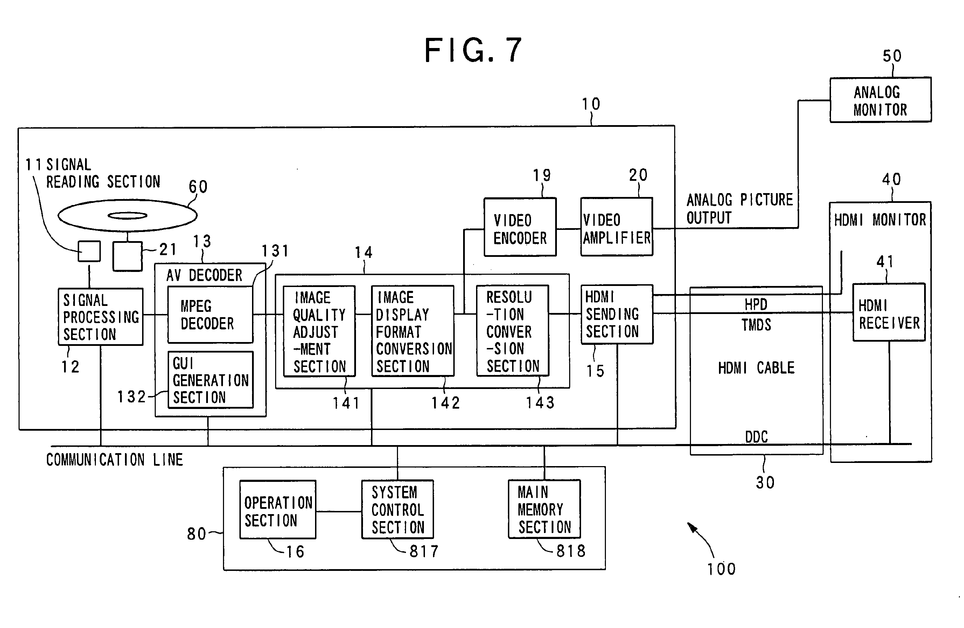

FIG. 7 shows the detailed configuration of members constituting the DVD image display system of the variation embodiment according to the present invention.

### DESCRIPTION OF THE PREFERRED EMBODIMENTS

This embodiment is an embodiment of an image display system using a DVD reproduction apparatus as an image output apparatus of the present invention and an HDMI-standardmonitor (hereinafter referred to an HDMI monitor) as a display apparatus of the present invention. The HDMI standard will be described later.

The DVD reproduction apparatus which is an image output apparatus of this embodiment and the DVD image display system which is an image display system of this embodiment will be specifically described below with reference to drawings.

### (1) First embodiment

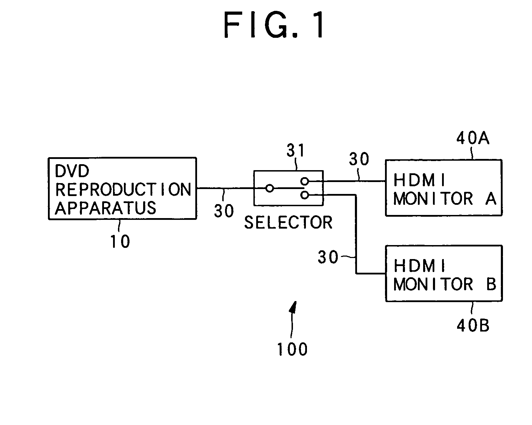

A first embodiment according to the present invention will be now described using FIGS. 1 to 6.

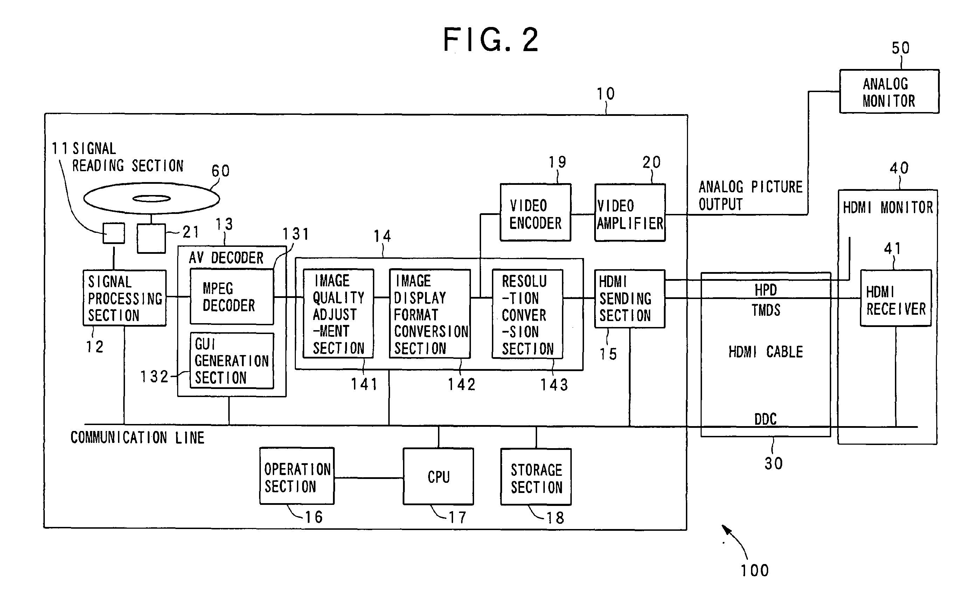

First, the configuration of a DVD image display system of this embodiment will be described using FIG. 1 and FIG. 2. FIG. 1 is a block diagram showing the schematic configuration of the DVD image display system of this embodiment. FIG. 2 shows the detailed configuration of members of the DVD reproduction apparatus and an HDMI monitor constituting the DVD image display system of this embodiment.

As shown in FIG. 1, in a DVD image display system 100 of this embodiment, a DVD reproduction apparatus 10 is connected to HDMI monitors 40A and 40B via HDML cables 30. There is provided a selector 31 between the HDMI monitors 40A and 40B and the DVD reproduction apparatus 10. The selector 31 switches between connection with the HDMI monitor 40A and connection with the HDMI monitor 40B.

As shown in FIG. 2, the DVD reproduction apparatus 10 comprises a signal reading section 11, a signal processing section 12, an AV decoder 13, an information conversion section 14, an HDMI sending section 15, an operation section 16, a CPU (central processing unit) 17, a storage section 18, a video encoder 19, a video amplifier 20 and a DVD driving section 21.

For example, the information conversion section 14 functions as a conversion device of the present invention, and the HDMI sending section 15 functions as an output device of the present invention. Furthermore, for example, the operation section 16 functions as an operation device of the present invention. Furthermore, for example, the CPU 17 functions as an acquisition device, an identification device, a determination device and a detection device of the present invention, and the storage section 18 functions as a storage device of the present invention.

The signal reading section 11 is arranged at a position where it can read record of a DVD recording medium 60 and connected to the signal processing section 12. This signal reading section 11 comprises a pickup and the like for the DVD recordingmedium 60. The signal recording section 11 reads marks and spaces recorded on the DVD recording medium 60 and outputs the marks and the spaces to the signal processing section 12.

The signal processing section 12 is connected to the signal reading section 11 and the AV decoder 13, as well as to the CPU 17 via a communication line within the DVD reproduction apparatus 10 (hereinafter simply referred to as a communication line) and controlled by the CPU 17.

Specifically, the signal processing section 12 comprises a signal processing circuit for converting the marks and the spaces received from the signal reading section 11 into digital data, a demodulation circuit for demodulating the converted digital data, in which record has been encoded using 8/16 modulation, an error correction circuit for correcting an error in the demodulated digital data, and the like, and generates a program stream from the marks and the spaces. The program stream is data on which signals, such as image information including static images and dynamic images (hereinafter simply referred to as image information) andvoice information, are multiplexed.

With each of the signal processing circuit, the demodulation circuit, the error correction circuit and the like, the signal processing section 12 separates the generated program stream into digital signals consisting of MPEG (Moving Picture Expert Group) type image information andAC3 type voice information.

The signal processing section 12 sends the separated image information to the AV decoder 13. The signal processing section 12 also sends the separated voice information to the AV decoder 13 as well as the above-mentioned image information.

The AV decoder 13 is connected to the signal processing section 12 and a picture information processing section 14 as well as to the CPU 17 via the communication line and controlled by the CPU 17. Specifically, the AV decoder 13 comprises an MPEG decoder 131 and a GUI generation section 132 for generating display conditions information about the HDMI monitor 40, which will be described later, as GUI.

When receiving image information from the signal processing section 12, the AV decoder 13 decodes the image information into a signal of a predetermined format. The AV decoder 13 then sends the decoded image information and the GUI image information, that is, the display conditions information about the monitor, which will be described later, generated as GUI based on an instruction from the CPU 17, to the information conversion section 14.

The AV decoder 13 also decodes the inputted voice information into a signal of a predetermined format and sends the decoded voice information to the HDMI sending section 15 via the information conversion section 14.

Specifically, when receiving image information from the signal processing section 12, an MPEG decoder 131 decodes the image information into a signal of a predetermined format. The MPEG decoder 131 then sends the decoded image information to an image quality adjustment section 141.

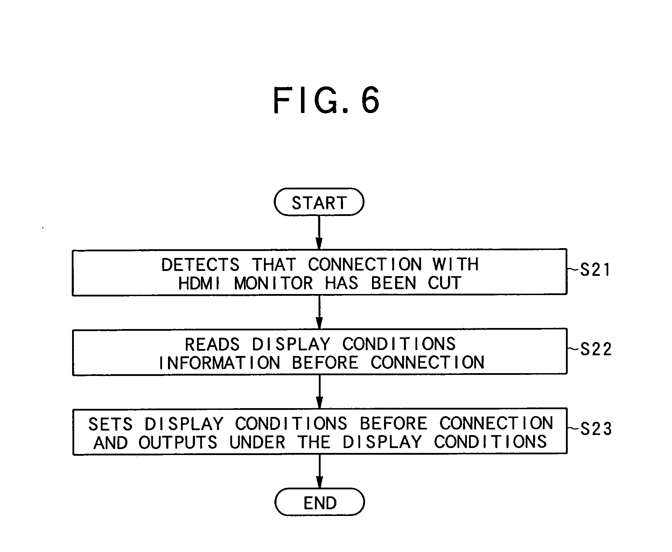

The GUI generation section 132 receives settings for display conditions, such as image quality, an image display format and resolution, for the DVD reproduction apparatus 10 to output image information to an HDMI monitor 40, from the HDMI monitor 40 or the storage section 18 via the CPU 17 as described later. The GUI generation section 132 then generates GUI image information which includes the received display conditions of the HDMI monitor 40 and on which a user can make settings through the operation section 16, and outputs the generated GUI image information to the HDMI monitor 40 via the HDMI sending section 15. For example, the GUI generation section 132 outputs GUI image information including such display conditions as shown in FIG. 6, which will be described later. The details of the display conditions will be described later.

The information conversion section 14 is connected to the AV decoder 13, the video encoder 19 and the HDMI sending section 15 as well as to the CPU 17 via the communication line and controlled by the CPU 17. Specifically, the information conversion section 14 comprises the image quality adjustment section 141, an image display format conversion section 142 and a resolution conversion section 143.

The information conversion section 14 receives image information and GUI image information from the AV decoder 13. The information conversion section 14 converts the image quality, the image display format and the resolution of the inputted image information in accordance with the settings for the display conditions of the HDMI monitor 40, which have been sent fromthe CPU 17 via the communication line, in response to an instruction from the CPU 17. The information conversion section 14 sends the converted image information, for which the image quality, the image display format and the resolution have been converted, to the HDMI sending section 15. The information conversion section 14 sends the converted image information, for which the image quality and the image display format have been converted, to the video encoder 19 to output the image information to an analog monitor 50 as an analog signal.

The information conversion section 14 also converts the inputted GUI image information similarly to the image information, based on an instruction from the CPU 17, and sends the converted GUI image information to the HDMI sending section 15. This GUI image information is converted in the same way as the image information, as described below. The information conversion section 14 also converts the inputted voice information in accordance with predetermined settings, based on an instruction from the CPU 17, and sends the converted voice information to the HDMI sending section 15.

The configuration of the component members of the information conversion section 14 will be now described.

When receiving image information from the AV decoder 13, the image quality adjustment section 141 adjusts the image quality of the inputted image information to correspond to the image quality set in the set display conditions obtained from the CPU 17 and the storage section 18 via the communication line. The image quality adjustment section 141 adjusts the image information to the image quality the user selected using the operation section 16. Specifically, the image quality adjustment section 141 adjusts the image quality such as brightness, contrast and the like of the image information displayed on the HDMI monitor 40. The image quality adj ustment section 141 then sends the image information for which the image quality has been adjusted to the image display format conversion section 142.

When receiving the image information for which the image quality has been adjusted from the image quality adjustment section 141, the image display format conversion section 142 converts the image display format of the inputted image information so that it corresponds to the image display format set in the set display conditions obtained from the CPU 17 and the storage section 18 via the communication line. That is, the image display format conversion section 142 converts the image display format of the inputted image information into the image display format that the user selected using the operation section 16. For example, the image display format conversion section 142 converts the image display format of the image information into an image display format of the HDMI monitor 40, such as an interlace format or a progressive format, corresponding to the inputted image information.

The image display format conversion section 142 then sends the image information for which the image display format has been converted to the resolution conversion section 143. The image display format conversion section 142 sends the converted image information for which the image display format has been converted to the video encoder 19 in order to output the image information as an analog signal to the analog monitor 50.

When receiving the image information for which the display format has been converted from the image display format conversion section 142, the resolution conversion section 143 converts the resolution of the image information so that it corresponds to the resolution set in the set display conditions obtained from the CPU 17 and the storage section 18 via the communication line. The resolution conversion section 143 sends the image information for which the resolution has been converted to the HDMI sending section 15.

The HDMI sending section 15 is connected to the information conversion section 14 as well as to the CPU 17 via the communication line, and controlled by the CPU 17. The HDMI sending section 15 is connected to the HDMI monitor 40 via the HDMI cable 30.

When receiving the converted image information for which the resolution has been converted from the information conversion section 14, that is, the resolution conversion section 143, the HDMI sending section 15 converts the converted image information into a predetermined format and sends the converted image information to the HDMI monitor 40. Thus, the HDMI sending section 15 outputs the converted image information to the HDMI monitor 40.

Specifically, the HDMI sending section 15 sends the received converted image information as a digital signal. More specifically, the HDMI sending section 15 converts the received converted image information into a digital signal based on HDMI-standard information and sends it.

For example, in this embodiment, the HDMI sending section 15 converts the converted image information into an HDMI-standard digital signal and sends it to the HDMI monitor 40 in the TMDS (Transition Minimized Differential Signaling) method via the HDMI cable 30.

The HDMI sending section 15 receives the converted GUI image information and the converted voice information from the information conversion section 14 and converts the information into a predetermined format in the same way as the converted image information described above, and sends the converted GUI image information and the converted voice information to the HDMI monitor 40.

The HDMI sending section 15 detects the presence/absence of connection between the DVD reproduction apparatus 10 and the HDMI monitor 40 from the HDMI cable 30. Specifically, the HDMI cable 30 includes an HPD (Hot Plug Detector) , and the HDMI sending section 15 receives information about the presence/absence of connection from this HPD. The HDMI sending section 15 sends the information about the presence/absence of connection received from the HPD to the CPU 17 via the communication line.

The operation section 16 is connected to the CPU 17. The operation section 16 is used for the user to change the display conditions of the HDMI monitor 40 to be described later. For example, on the operation section 16, settings can be made for the display conditions by directly pressing a button thereon. Specifically, when the user uses the operation section 16 to change the display conditions of the HDMI monitor 40, the operation section 16 sends information to the effect that the display conditions are changed to the CPU 17.

The CPU 17 is connected to the operation section 16 as well as to the signal processing section 12, the AV decoder 13, the information conversion section 14, the HDMI sending section 15 and the storage section 18 via the communication line. The CPU 17 is also connected to the HDMI monitor 40 via a DDC (Display Data Channel) to be described later and the communication line. An instruction from the CPU 17 is sent to each of the component members, that is, the signal processing section 12, the AV decoder 13, the information conversion section 14, the HDMI sending section 15 and the storage section 18 via the communication line, and the CPU 17 controls each of these component members. Furthermore, the CPU 17 acquires conditions information including information about display conditions (hereinafter referred to as display conditions information) to be described later, from the HDMI monitor 40 via the DDC.

When receiving the information to the effect that the DVD reproduction apparatus 10 and the HDMI monitor 40 are connected to each other from the HDMI sending section 15, the CPU 17 acquires the conditions information about the HDMI monitor 40 from the HDMI monitor 40 via the DDC. The CPU 17 then instructs the information conversion section 14 to convert image information in accordance with the display conditions set based on the conditions information. The CPU 17 instructs the GUI generation section 132 to generate GUI based on the display conditions of the HDMI monitor 40 and output image information in the generated GUI (hereinafter referred to as GUI image information) to the HDMI monitor 40. The conditions information includes identification information identifying the kind of the HDMI monitor 40 and identifying that it is the same monitor. The details of this identification information will be described later.

Furthermore, the CPU 17 sends the conditions information sent from an HDMI monitor 40 or the conditions information for which the display conditions have been changed by changing the setting with the use of the operation section 16, to the storage section 18 to store the identification information about each HDMI monitor 40 and the other conditions information thereabout in association with each other in the storage section 18. When the identification information is inputted from an HDMI monitor 40 into the CPU 17, the CPU 17 reads from the storage section 18 the conditions information about an HDMI monitor 40 identified by the identification information, if conditions information corresponding to the HDMI monitor 40 having the identification information is stored in the storage section 18. The CPU 17 then instructs the information conversion section 14 to convert the image information in accordance with the display conditions set based on the read conditions information.

Furthermore, the CPU 17 determines the standard which the conditions information acquired from a connected HDMI monitor 40 is based on. Specifically, the CPU 17 determines the standard which the connected monitor is based on, such as the HDMI standard and the DVI standard, from a registration identifier to be described later that is inputted together with the conditions information.

By determining the standard as described above, the standard which the conditions information to be inputted into the CPU 17 is based on is identified, and thereby it is possible for the CPU 17 to cause the HDMI sending section 15 to convert the converted image information into a signal of a predetermined format and send it to the HDMI monitor 40.

For example, in this embodiment, since the HDMI monitor 40 of the HDMI standard is connected to the DVD reproduction apparatus 10 as described above, the CPU 17 determines that the standard which the conditions information acquired from the connected HDMI monitor 40 is based on is the HDMI standard. The CPU 17 then instructs the HDMI sending section 15 to convert the converted image information into a digital signal based on the determined HDMI standard and sends it.

Furthermore, when detecting information to the effect that connection between the HDMI monitor 40 and the DVD reproduction apparatus 10 has been cut by receiving information to the effect that the HDMI monitor 40 and the DVD reproduction apparatus 10 is not connected to each other from the HDMI sending section 15, the CPU 17 reads conditions information including display conditions set before the DVD reproduction apparatus 10 and the HDMI monitor 40 were connected from the storage section 18. The CPU 17 then instructs the information conversion section 14 to convert the image information in accordance with the display conditions before connection and output the image information to the analog monitor 50 as an analog signal.

The storage section 18 is connected to the CPU 17 via the communication line. The storage section 18 stores the conditions information about each HDMI monitor 40 sent from the CPU 17 together with the identification information about the HDMI monitor 40.

Each time conditions information is changed, the storage section 18 stores the changed conditions information. Furthermore, the storage section 18 stores conditions information before connection with the HDMI monitor 40.

The video encoder 19 is connected to the information conversion section 14 and the video amplifier 20. When receiving image information for which the image quality or the image display format has been converted from the image display format conversion section 142, the video encoder 19 converts the image information into a signal for analog output. The video encoder 19 sends the converted image information to the video amplifier 20.

The video amplifier 20 is connected to the video encoder 19. The video amplifier 20 is also connected to an analog cable. If the analog monitor 50 is connected via the analog cable, the video amplifier 20 outputs an analog signal to the analog monitor 50. Specifically, when receiving image information which has been converted into a signal for analog output from the video encoder 19, the video amplifier 20 amplifies the signal for analog output. The video amplifier 20 then outputs the amplified image information signal for analog output to the analog monitor 50 via the analog cable.

A DVD driving section 21 is a member for driving the DVD recording medium 60 and is provided with a spindle motor or the like for rotating the DVD recording medium 60. The rotational speed of the spindle motor can be varied at least within the range from 680 to 1400 rpm according to the position of the pickup of the signal reading section 11.

The DDC and the HDMI will be now described.

"DDC" is an abbreviation for "Display Data Channel", which is the name of a communication format. The DDC is a line used for sending not only information such as display conditions of image information and voice conditions of voice information but also other information about an HDMI monitor 40 to the DVD reproduction apparatus 10. The DDC is connected to the communication line in the DVD reproduction apparatus 10 and used for establishing a line between the DVD reproduction apparatus 10 and the HDMI monitor 40.

"HDMI" is an abbreviation for "High Definition Multimedia Interface", which is an interface for transmitting digital A/V signals from an output apparatus such as a DVD reproduction apparatus to a display apparatus such as a television receiver and a projector display apparatus. The HDMI was developed by extending DVI (Digital Visual Interface for Computer) Ver. 1.0, an existing standard. Specifically, the DVI is a standard for sending only image information, while the HDMI is a standard for sending voice and other information in addition to image information via the same cable. Furthermore, the HDMI enables transmission of a high-quality multi-channel voices and high-resolution image signals (picture signals) of various formats.

It is also possible to use the HDMI to transmit various information (information about a monitor, such as an EDID data structure, for example) via the DDC communication described above. The HDMI has an advantage that image information and voice information can be transmitted via the same cable as described above, and thereby the burden of connecting multiple cables can be eliminated. The HDMI is approved by the CPAC (Copy Protection Advisory Council) as a standard for outputting contents in a CSS (Content Scrambling System) from the DVD reproduction apparatus 10.

The CSS is a system for encrypting and recording data and decoding the data for reproduce. The DVD reproduction apparatus 10 is provided with this CSS mechanism in order to realize protection of a DVD video title from being copied. Thus, the HDMI is also advantageous for copyright protection.

The HDMI monitor 40 will be now described.

The HDMI monitor 40 has an HDMI receiver 41. The HDMI receiver 41 receives a digital signal of the converted image information which has been sent from the DVD reproduction apparatus 10 in the TMDS method. The HDMI receiver 41 sends the received digital signal to a predetermined component member (not shown) in the HDMI monitor 40 so that the image information can be displayed. The HDMI monitor 40 then displays the image information based on the converted image information received as a digital signal.

The HDMI receiver 41 is connected to the DDC, and sends an EDID data structure as the above-described conditions information to the DVD reproduction apparatus 10.

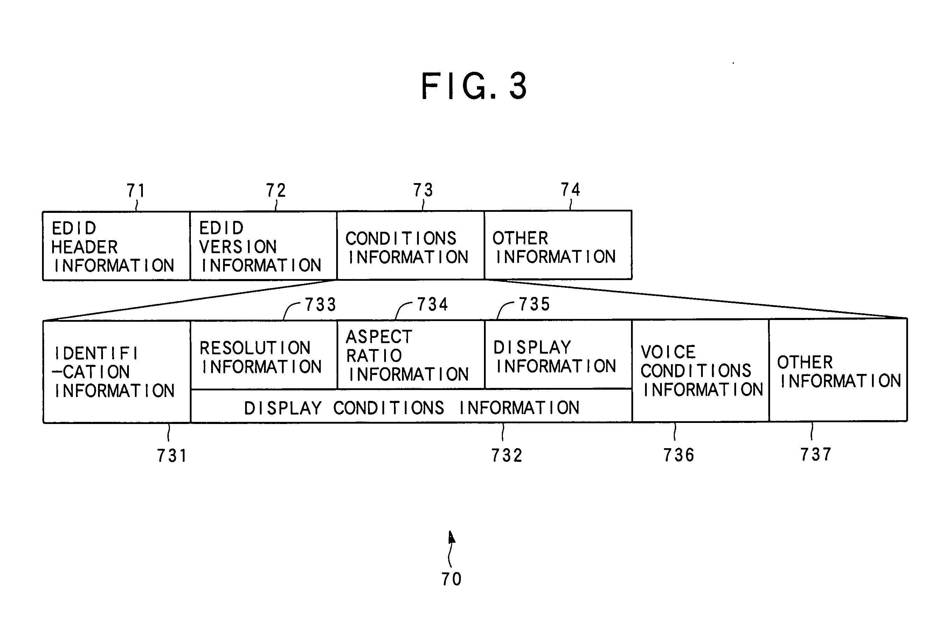

Description will be now made on the conditions information including display condition information about the HDMI monitor 40 or an analog monitor using FIG. 3. The above-mentioned identification information is also included in the conditions information. FIG. 3 shows the configuration of an EDID data structure to be sent from an HDMI monitor to the DVD reproduction apparatus 10.

The conditions information is sent fromthe HDMI monitor 40 to the CPU 17 via DDC communication. The conditions information is included in a data structure called EDID (Extended Display Identification Data). As shown in FIG. 3, an EDID data structure 70 includes EDID header information 71 indicating the header of the EDID data structure, EDID version information 72 indicating the version of the EDID data structure, conditions information 73 described above, and other information 74, information other than the aforementioned information. The conditions information 73 includes identification information 731 identifying the monitor, display conditions information 732 indicating display conditions of the monitor, voice conditions information 736 indicating voice conditions of the monitor, and other information 737 other than the aforementioned information.

For example, the identification information 731 comprises the manufacturer's name of the monitor, the product code of the monitor, the serial number of the monitor, the week and year of manufacture of the monitor, predetermined monitor name information and the like. For example, the display conditions information 732 comprises resolution information 733 including appropriate resolution information indicating at least one resolutions appropriate for themonitor and optimum resolution information indicating the most suitable resolution among the appropriate resolutions for the monitor, aspect ratio information 734 indicating the possible aspect ratio to be displayed on the monitor, and display information 735 indicating other display conditions of the monitor. The display information 735 is display information other than the aforementioned specific display conditions and comprises information related to display, such as information about the image display format corresponding to the monitor, information about the reference image quality for display on the monitor, and information about the number of pixels corresponding to the monitor. Furthermore, the voice conditions information 736 comprises covered voice types information indicating voice types to be covered, such as Dolby Digital voice and DTS (Digital Theater System) voice.

The other information 74 of the EDID data structure 70 comprises: basic display parameters including the definition of picture input, the maximum image size and display transmission characteristics; the RGB color characteristics of the monitor; picture signal timing including resolution information, frequency information and aspect ratio information; an extension data presence/absence flag indicating presence or absence of monitor extension data (extension); and a checksum used for detecting an error in transmission of data.

If the extension data presence/absence flag indicates that extension data is included, other information 74 enumerated below is also included. Specifically, this other information 74 comprises: tag information indicating attribute information; a revision number indicating the minor version number increased every time the monitor is improved; starting position information indicating the starting position of the conditions information 73 in the EDID data structure; the total number of optimum image formats indicating the total number of optimum image formats (an appropriate resolution, an optimum resolution and an aspect ratio) when there are defined more than one optimum formats in the display conditions of the monitor; a registration identifier distinguishing the HDMI standard from the DVI standard; checksums for padding data and for extension data, which is used for filling the lack when the data amount is insufficient to form data in a format of a predetermined size, and the like.

Similarly, if the extension data presence/absence flag indicates that extension data is included, the other information 74 also includes video tag information indicating a video block where information about image display of the monitor is stored, information about the length of the video block, audio tag information indicating an audio block where information about voice of the monitor is stored, information about the length of the audio block, speaker tag information indicating a speaker block where information about a speaker of the monitor is stored, information about the length of the speaker block, speaker information indicating information about the speaker of the monitor, vendor tag information indicating a vendor-specific block where information about a manufacturer of the monitor is stored, information about the length of the vendor-specific block, and the like.

Though the above-mentioned information is used as the display conditions information 732 in this embodiment, this is not limiting and the other information 74 included in the EDID data structure may be used. The voice conditions information 736 may be included in the extension data in the other information 74.

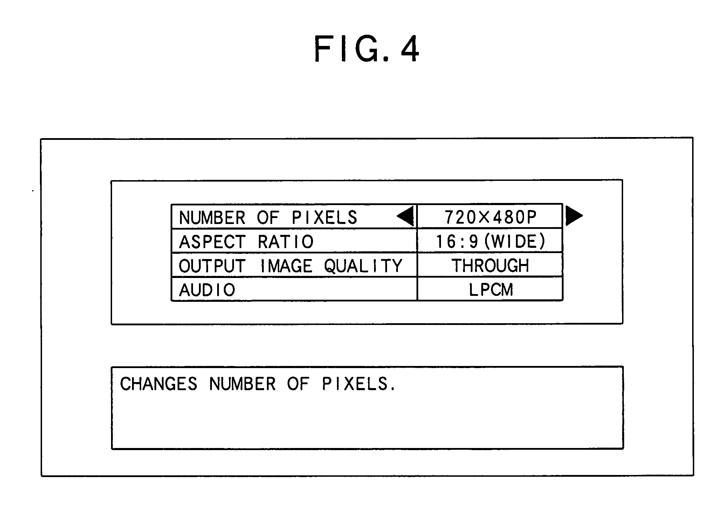

The display conditions set based on the display conditions information are sent fromthe GUI generation section 132 and displayed on a screen (not shown) of the HDMI monitor 40. For example, there are displayed items of display conditions and actual display conditions set in response to an instruction of the CPU 17 for this item or with the use of the operation section 16 by the user on this screen as shown in FIG. 4. FIG. 4 shows an example of GUI image information showing the display conditions to be displayed on the HDMI monitor 40.

Though a number of pixels, an aspect ratio, output image quality and audio (voice) are listed up as items of display conditions in the embodiment shown in FIG. 4, the items are not limited to this combination, and additional items of display conditions such as the image display format to be converted into by the image display format conversion section 142 shown in FIG. 2 and the resolution to be converted into by the resolution conversion section 143 may be displayed on the screen.

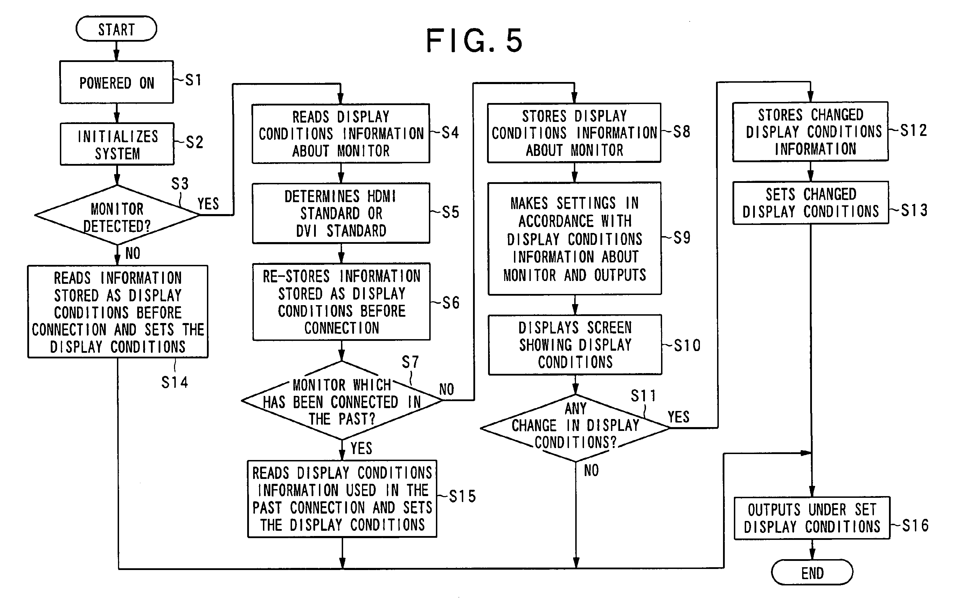

Description will be now made on the operation of the DVD reproduction apparatus 10 in the DVD image display system 100 according to the first embodiment using FIG. 5.

FIG. 5 is a flowchart showing the operation of setting and outputting display conditions for image information in the DVD image display system 100. This processing is an embodiment for outputting image information to the HDMI monitor 40 when an HDMI monitor 40 is connected to the DVD reproduction apparatus 10 in the DVD image display system shown in FIG. 2.

First, when the DVD reproduction apparatus 10 is powered on by a power supply switch not shown (step S1) , each system of the DVD reproduction apparatus 10 is initialized (step S2) . Then, the CPU 17 receives information about the presence/absence of connection between the DVD reproduction apparatus 10 and the HDMI monitor 40 from the HPD via the HDMI sending section 15, and detects the presence/absence of connection between the DVD reproduction apparatus 10 and the HDMI monitor 40 (step S3) . If the DVD reproduction apparatus 10 and the HDMI monitor 40 are connected to each other, the CPU 17 detects that the DVD reproduction apparatus 10 and the HDMI monitor 40 are connected to each other (step S3: YES).

On the contrary, if the CPU 17 detects that the HDMI monitor 40 is not connected (step S3: NO), then the CPU 17 reads display conditions information before connection that has been stored in the storage section 18 in advance, via the communication line, and causes the information conversion section 14 to set display conditions for image information based on the display conditions information (step S14). The procedure then proceeds to step S16 to be described later.

After detecting that the DVD reproduction apparatus 10 and the HDMI monitor 40 are connected to each other (step S3: YES) , the CPU 17 acquires conditions information including display conditions information from the HDMI monitor 40 via the DDC (step S4).

The CPU 17 then determines the standard which the connected HDMI monitor 40 is based on, from a registration identifier acquired from the HDMI monitor 40 via the DDC (step S5).

Specifically, the CPU 17 determines whether the standard which the connected HDMI monitor 40 is based on is the HDMI standard or the DVI standard from the registration identifier.

The CPU 17 then causes the display conditions information before connection of the HDMI monitor 40 to be stored in the storage section 18 via the communication line (step S6).

The CPU 17 then detects identification information about the HDMI monitor 40 from the acquired conditions information, and determines whether or not the HDMI monitor 40 connected currently has been connected before based on this identification information (step S7).

Specifically, the CPU 17 checks the monitor name information included in the identification information acquired from the HDMI monitor 40 with the monitor name information stored in the storage section 18 as identification information. If the monitor name information about the HDMI monitor 40 connected currently is stored in the storage section 18, then the CPU 17 determines that the HDMI monitor 4 0 connected currently is a monitor which has been connected in the past.

If the CPU 17 determines that the connected HDMI monitor 40 is a monitor which has been connected in the past (step S7: YES), then it reads the display conditions information used in the past connection and stored in the storage section 18, based on the identification information about the HDMI monitor 40, and causes the information conversion section 14 to set display conditions for image information based on this display conditions information (step S15). The procedure then proceeds to step S16.

On the contrary, if the CPU 17 determines that the connected HDMI monitor 40 is not a monitor which has been connected in the past (step S7: NO), then it stores the conditions information including display conditions information about the HDMI monitor 40, which has been received from the HDMI monitor 40, in the storage section 18 (step S8) .

The CPU 17 then causes the information conversion section 14 to convert image information read from the DVD recording medium 60 in accordance with the received display conditions information about the HDMI monitor 40, and causes the HDMI monitor 40 to output the converted image information via the HDMI sending section 15 (step S9).

The CPU 17 then causes the GUI generation section 132 to generate GUI image information showing display conditions for image information outputted to the HDMI monitor 40, for example, as shown in FIG. 4 (step S10). In this case, the GUI image information is inputted into the HDMI monitor 40 via the HDMI sending section 15, and the HDMI monitor 40 displays the generated GUI image information on a screen not shown.

The user of the DVD reproduction apparatus 10 seeing the screen is prompted to determine whether or not to change the display conditions, and the CPU 17 determines whether or not the display conditions have been changed based on the presence/absence of an instruction from the operation section 16 (step S11).

If the CPU 17 recognizes that the display conditions have been changed from the operation section 16 (step S11: YES), it stores the changed display conditions information into the storage section 18 (step S12).

The CPU 17 then causes the information conversion section 14 to set the changed display conditions information for the HDMI monitor 40, which has been received from the operation section 16 (step S13), and the procedure proceeds to step S16.

On the contrary, if the CPU 17 does not recognize that the display conditions have been changed from the operation section 16 (step S11: NO), then the procedure immediately proceeds to step S16.

The CPU 17 then causes the information conversion section 14 to convert the image information read from the DVD recording medium 60 based on the set display conditions, causes the converted image information to be outputted on the HDMI monitor 40 via the HDMI sending section 15 (step S16), and ends the operation.

Specifically, the CPU 17 causes the information conversion section 14 to convert the image information acquired from the DVD recording medium 60 via the signal reading section 11, the signal processing section 12 and the AV decoder 13, in accordance with the set display conditions of image quality, image display format and resolution. The CPU 17 then causes the converted image information to be outputted to the HDMI monitor 40 via the HDMI sending section 15.

After step S14, the CPU 17 causes the image display format conversion section 142 to output the image information converted by the information conversion section 14 to the analog monitor 50 as an analog signal via the video encoder 19 and the video amplifier 20.

Description will be now made on the image output processing to be performed in the DVD image display system 100 when the HDMI monitor 40 is disconnected from the DVD reproduction apparatus 10 using FIG. 6.

FIG. 6 is a flowchart showing the operation to be performed when the HDMI monitor 40 is disconnected from the DVD reproduction apparatus 10.

When connection between the DVD reproduction apparatus 10 and the HDMI monitor 40 is cut and the HPD detects the disconnection, the HPD sends information to the effect that connection has been cut to the CPU 17 via the HDMI sending section 15 and the communication line, and thereby the CPU 17 detects the disconnection (step S21).

The CPU 17 then reads display conditions information before connection from the storage section 18 (step S22).

The CPU 17 then causes the information conversion section 14 to convert image information read from the DVD recording medium 60 based on display conditions set in accordance with the read display conditions information before connection, causes the converted image information to be outputted to the analog monitor 50 (step S23) and ends the operation.

As described above, the DVD reproduction apparatus 10 of the first embodiment is a DVD reproduction apparatus 10 which is connected to an HDMI monitor 40 that displays image information and which outputs the image information to the HDMI monitor 40, the DVD reproduction apparatus 10 comprising: a CPU 17 which acquires conditions information indicating display conditions of the HDMI monitor 40 from the HDMI monitor 40 in advance; an information conversion section 14 which converts image information to be outputted to the HDMI monitor 40 based on the conditions information; and an HDMI sending section 15 which outputs the image information converted by the information conversion section 14 to the HDMI monitor 40.

Even if a new HDMI monitor 40 is connected, this DVD reproduction apparatus 10 can acquire display conditions information from the newly connected HDMI monitor 40. Accordingly, the DVD reproduction apparatus 10 can output image information to the connected HDMI monitor 40 under suitable display conditions based on the acquired display conditions information. Therefore, even if a new HDMI monitor 40 is connected to the DVD reproduction apparatus 10, the user can output image information under suitable display conditions without necessity to change settings for the display conditions for image information, and thereby the convenience of the DVD reproduction apparatus 10 for the user is improved.

The DVD reproduction apparatus 10 described above may further comprise: a storage section 18 which stores the conditions information acquired by the CPU 17, and which includes identification information identifying the HDMI monitor 40; and the CPU 17 which has an identification function identifying the HDMI monitor 40 to which the image information is to be outputted based on the conditions information acquired by the CPU 17. The information conversion section 14 reads the conditions information suitable for the connected HDMI monitor 40 from the storage section 18, based on the HDMI monitor 40 identified by the CPU 17, and converts the image information to be outputted based on the read conditions information.

Thus, as for an HDMI monitor 40 which has been connected before, conditions information including identification information about the HDMI monitors 40 is stored in the storage section 18. Therefore, based on display conditions information about an HDMI monitor 40 which has been connected before and which corresponds to the identification information about the HDMI monitor 40 connected again, image information can be outputted to the HDMI monitor 40 connected again under suitable display conditions. That is, even if a user changed the display conditions acquired from the HDMI monitor 40 when it was connected before, image information can be outputted to the HDMI monitor 40 not under the display conditions acquired from the HDMI monitor 40 but under the display conditions changed and set by the user. Accordingly, when the HDMI monitor 40 is connected to the DVD reproduction apparatus 10 again, it is possible for the user to output image information under the display conditions which he or she set before and on which his or her preferences are reflected without changing settings for the display conditions for image information, and thereby the convenience of the DVD reproduction apparatus 10 for the user is improved.

In the DVD reproduction apparatus 10 described above, the HDMI sending section 15 may output the converted image information which is formed by a digital signal.

Accordingly, the DVD reproduction apparatus 10 can output image information as a digital signal to the connected HDMI monitor 40 under display conditions suitable for the HDMI monitor 40, and thereby the image information can be outputted without deterioration.

In the DVD reproduction apparatus 10 described above, the HDMI sending section 15 may output the converted image information which is formed by an HDMI-standard digital signal.

Accordingly, the DVD reproduction apparatus 10 can output image information as an HDMI-standard digital signal to the connected HDMI monitor 40 under display conditions suitable for the connected HDMI monitor 40, and thereby the image information can be outputted without deterioration.

In the DVD reproduction apparatus 10 described above, the CPU 17 may further comprise a determination function of determining the standard which the conditions information acquired from the HDMI monitor 40 is based on, and the CPU 17 acquires the conditions information based on the standard determined by the determination function.

Thus, the DVD reproduction apparatus 10 determines whether the standard is the HDMI standard or the DVI standard, for example, from a registration identifier included in conditions information sent from the connected HDMI monitor 40. The HDMI standard usually corresponds to the DVI standard compatible with the HDMI standard. Therefore, even if conditions information based on either of the standards is sent from a connected monitor, the DVD reproduction apparatus 10 can acquire appropriate conditions information based on the determined standard. Furthermore, the DVD reproduction apparatus 10 can output image information to the connected HDMI monitor 40 based on the conditions information suitable for the determined standard.

The DVD reproduction apparatus 10 may further comprise an operation section 16 which is used for an operation of changing display conditions of the HDMI monitor 40. When the display conditions have been changed, the storage section 18 stores the changed display conditions as display conditions to be used for conversion into image information to be outputted.

Accordingly, the user of the DVD reproduction apparatus 10 can use the operation section 16 to change settings for display conditions for image information according to his or her preferences with regard to better view, for example. Furthermore, the DVD reproduction apparatus 10 can output image information to the HDMI monitor 40 using the display conditions for which settings have been changed.

The display conditions for which settings have been changed are stored in the storage section 18. Therefore, as for an HDMI monitor 40 which has been connected before, image information can be outputted to the HDMI monitor 40 under the display conditions used when it was connected before, based on the identification information about the HDMI monitor 40, even when connection is cut. Accordingly, the user can see image information under suitable display conditions without necessity to change settings for the display conditions again, and thereby the convenience of the DVD reproduction apparatus 10 for the user is improved.

In the DVD reproduction apparatus 10 described above, the CPU 17 further comprises a function of detecting that connection with the HDMI monitor 40 has been cut if the storage section 18 stores display conditions before connection as display conditions before connection with the HDMI monitor 40 in advance, and the information conversion section 14 converts the image information based on the stored display conditions before connection if the CPU 17 detects that connection with the HDMI monitor 40 has been cut.

Accordingly, the DVD reproduction apparatus 10 converts the image information based on the display conditions before connection if connection with the HDMI monitor 40 based on a standard for outputting image information as a digital signal has been cut. For example, if the analog monitor 50, from which image information is outputted as an analog signal, and the DVD reproduction apparatus 10 are connected to each other, the converted image information is also outputted to the analog monitor 50.

Thus, even when image information is outputted to a monitor based on a standard other than the HDMI standard, such as the analog monitor 50, the DVD reproduction apparatus 10 can output image information based on display conditions which have been preset in advance and stored. Accordingly, the user can output image information on the analog monitor 50 under suitable display conditions without necessity to change settings for display conditions of a monitor based on a standard other than the HDMI standard again, such as the analog monitor 50 each time, and thereby the convenience of the DVD reproduction apparatus 10 for the user is improved.

In the DVD reproduction apparatus 10 described above, the CPU 17 may acquire the conditions information which includes at least one of the aspect ratio, the resolution, the number of pixels, an image display format and image quality of the image information displayed on the HDMI monitor 40 in addition to the identification information about the HDMI monitor 40.

Accordingly, even if a new HDMI monitor 40 is connected, the DVD reproduction apparatus 10 can acquire from the newly connected HDMI monitor 40 at least one of display conditions among the aspect ratio, the resolution, the number of pixels, the image display format and the image quality together with the identification information. Therefore, the DVD reproduction apparatus 10 can output image information to the connected HDMI monitor 40 under suitable display conditions based on the acquired display conditions.

Accordingly, even if a new HDMI monitor 40 is connected to the DVD reproduction apparatus 10, the user can output image information under suitable display conditions without necessity to change settings for display conditions for image information, and thereby the convenience of the DVD reproduction apparatus 10 for the user is improved.

Furthermore, the DVD image display system 100 of the first embodiment is an image display system comprising an HDMI monitor 40 which displays image information and a DVD reproduction apparatus 10 which is connected to the HDMI monitor 40 and which outputs the image information to the HDMI monitor 40; the image display system comprising: an CPU 17 which acquires conditions information indicating display conditions of the HDMI monitor 40 from the HDMI monitor 40 in advance; an information conversion section 14 which converts image information to be outputted to the HDMI monitor 40 based on the conditions information; and an HDMI sending section 15 which outputs converted image information converted by the information conversion section 14, to the HDMI monitor 40; wherein the HDMI monitor 40 displays image information in accordance with the converted image information outputted from the DVD reproduction apparatus 10.

Thus, according to this DVD image display system 100, even if a new HDMI monitor 40 is connected, the DVD reproduction apparatus 10 can acquire display conditions information from the newly connected HDMI monitor 40. Accordingly, the DVD reproduction apparatus 10 can output image information under display conditions suitable for the connected HDMI monitor 40 based on the acquired display conditions information. Accordingly, in the DVD image display system 100, even if a new HDMI monitor 40 is connected to the DVD reproduction apparatus 10, the user can output image information under suitable display conditions without necessity to change settings for the display conditions for image information, and thereby the convenience of the DVD reproduction apparatus 10 for the user is improved.

### (2) Second embodiment

A second embodiment according to the present invention will be now described.

The second embodiment is characterized in that the DVD reproduction apparatus 10 in the first embodiment according to the present invention, which reads image information from the DVD recording medium 60, converts the image information and outputs it to the HDMI monitor 40, further reads voice information together with image information from the DVD recording medium 60, converts not only the image information but also the voice information and outputs them to the HDMI monitor 40. The remaining part of the configuration is the same as that of the first embodiment, and therefore, the same members are given the same reference numerals and description thereof is omitted.

First, the configuration and operation of the DVD reproduction apparatus 10 and the HDMI monitor 40 will be now described with regard to how the DVD reproduction apparatus 10 outputs the voice information to the HDMI monitor 40 in the second embodiment.

The information conversion section 14 of the DVD reproduction apparatus 10 is provided with a voice information conversion section (not shown) for converting voice information read from the DVD recording medium 60. The operation section 16 of the DVD reproduction apparatus 10 is also used for changing voice conditions information, which is conditions of voice information to be outputted to the HDMI monitor 40. The HDMI monitor 40 outputs voices outward based on the voice information inputted from the DVD reproduction apparatus 10.

The CPU 17 of the DVD reproduction apparatus 10 reads conditions information including the voice conditions information from the HDMI monitor 40. The CPU 17 then controls a voice information conversion section of the information conversion section 14 to convert the voice information based on the read voice conditions information. Furthermore, the CPU 17 controls the HDMI sending section 15 to output the converted voice information, which is voice information converted by the voice information conversion section, to the HDMI monitor 40. The HDMI monitor 40 outputs voices outward based on the voice information inputted from the DVD reproduction apparatus 10.

The voice conditions information mentioned here means the voice conditions information 736 described in the first embodiment using FIG. 3.

For example, in the second embodiment, a user can use the operation section 16 to make selection from "Linear PCM Voice", "Auto" for automatically setting voice conditions corresponding to the voice conditions information 736, and the like. If the user selects "Auto", the CPU 17 instructs the information conversion section 14 to convert the voice information sent from the DVD recording medium 60 in accordance with the corresponding voice conditions information sent as the voice conditions information 736.

If the user selects "Linear PCM Voice", the CPU 17 instructs the information conversion section 14 to convert the voice information sent from the DVD recording medium 60 into linear PCM voices as voice conditions information.

In this embodiment, other operations in the DVD image display system 100 are the same as those in the first embodiment.

As described above, the differences between the DVD reproduction apparatus 10 of the second embodiment and the DVD reproduction apparatus 10 of the first embodiment are as follows: the HDMI monitor 40 further outputs voices outward based on voice information; the CPU 17 further acquires the conditions information which includes voice conditions of the HDMI monitor 40; the information conversion section 14 converts the voice information to be outputted to the HDMI monitor 40 based on the conditions information; and the HDMI sending section 15 outputs converted voice information, which is converted by the information conversion section 14, to the HDMI monitor 40.

Thus, according to the DVD reproduction apparatus 10 of the second embodiment, even if a new HDMI monitor 40 is connected, the DVD reproduction apparatus 10 can acquire voice conditions information in addition to display conditions information, from the newly connected HDMI monitor 40. Therefore, this DVD reproduction apparatus 10 can output voice information under voice conditions suitable for the connected HDMI monitor 40 based on the acquired voice conditions information. Accordingly, even if a new HDMI monitor 40 is connected to the DVD reproduction apparatus 10, the user can listen to voices under suitable voice conditions without necessity to change settings for the conditions for voice information, and thereby the convenience of the DVD reproduction apparatus 10 for the user is improved.

Furthermore, in the DVD reproduction apparatus 10 described above, the operation section 16 may be used for an operation of changing the voice conditions.

Accordingly, the user in the DVD reproduction apparatus 10 of the second embodiment can use the operation section 16 to change settings for voice conditions for voice information according to his or her preferences with regard to better listening, for example. The DVD reproduction apparatus 10 can output voice information to the HDMI monitor 40 under voice conditions for which settings have been changed. The voice conditions for which settings have been changed can be stored in the storage section 18. Therefore, as for an HDMI monitor 40 which has been connected before, voice information can be outputted to the HDMI monitor 40 under the voice conditions used when it was connected before, based on the identification information about the HDMI monitor 40, even when the connection is cut. Accordingly, the user can listen to voice information under suitable voice conditions without necessity to change settings for the voice conditions again, and thereby the convenience of the DVD reproduction apparatus 10 for the user is improved.

### (3) Third embodiment

A third embodiment according to the present invention will be now described.

In the DVD image display system 100 in the first embodiment of the present invention, one HDMI monitor 40 is connected to the DVD reproduction apparatus 10 as shown in FIG. 2. However, the third embodiment is characterized in that two HDMI monitors 40A and 40B are connected to the DVD reproduction apparatus 10 as shown in FIG. 1. The remaining part of the configuration is the same as that of the first embodiment, and therefore, the same members are given the same reference numerals and description thereof is omitted.

Between the DVD reproduction apparatus 10 and the two HDMI monitors 40A and 40B in the third embodiment, there can be provided a selector 31 via HDMI cables 30 as shown in FIG. 1. This selector 31 switches between connection of the DVD reproduction apparatus 10 to one of the two monitors connected to the other, so that it is used for a user of the DVD image display system 100 to select which of one of the monitors should be connected to the DVD reproduction apparatus 10. The selector 31 functions as a selection device of the present invention, for example.

Description will be now made on the operation of the DVD reproduction apparatus 10 performed when a user of the DVD image display system 100 uses the selector 31 to switch from the connected HDMI monitor 40A to the HDMI monitor 40B.

If the user of the DVD image display system 100 uses the selector 31 to switch from the connected HDMI monitor 40A to the HDMI monitor 40B, the conditions information about the HDMI monitor 40B which is connected after the switching is sent to the CPU 17 via the DDC. Then, based on the conditions information about the HDMI monitor 40B, image information is outputted from the DVD reproduction apparatus 10 to the HDMI monitor 40B in accordance with the procedure after step S3 as described above using FIG. 5.

If the user of the DVD image display system 100 uses the selector 31 to return connection from the HDMI monitor 40B back to the HDMI monitor 40A, then conditions information including the identification information about the HDMI monitor 40A, which is connected after the switching, is sent to the CPU 17 via the DDC. Then, based on the received identification information about the HDMI monitor 40A, image information is outputted from the DVD reproduction apparatus 10 to the HDMI monitor 40A in accordance with the procedure after step S3, especially via step S15, as described above using FIG. 5.

The remaining part of the configuration and other operations of the third embodiment are the same as those in the first embodiment.

Though the selector 31 is connected to the two HDMI monitors 40A and 40B in FIG. 1, the configuration of the selector 31 is not limited thereto and it can be connected to more than two monitors. Alternatively, the selector 31 may be connected to the DVD reproduction apparatus 10 and multiple monitors so that the DVD reproduction apparatus 10 may output image information to the multiple monitors at the same time.

As described above, in the DVD image display system 100 of the third embodiment, if multiple HDMI monitors 40 are provided, there is provided a selector 31 for selecting at least any one of the HDMI monitors 40 between the DVD reproduction apparatus 10 and the HDMI monitors 40.

Accordingly, the user of the DVD image display system 100 can use the selector 31 to switch between connection of the DVD reproduction apparatus 10 to the HDMI monitor 40A and connection to the HDMI monitor 40B. Even if switching is performed between connection of the DVD reproduction apparatus 10 to the HDMI monitor 40A and connection to the HDMI monitor 40B, display conditions information can be acquired from the HDMI monitor 40A or the HDMI monitor 40B which is connected after switching. Accordingly, the DVD image display system 100 can output image information under display conditions suitable for the connected HDMI monitor 40A or 40B, based on the display conditions information acquired after switching of connection. Accordingly, even if switching is performed between connection of the DVD reproduction apparatus 10 to the HDMI monitor 40A and connection to the HDMI monitor 40B with the use of the selector 31, the user can output image information under suitable display conditions on the connected HDMI monitor 40A or 40B without necessity to change settings for the display conditions for image information, and thereby the convenience for the user in the DVD image display system 100 is improved.

### (4) Variation embodiments

Description will be now made on variation embodiments of each of the embodiments described above.

Though the DVD reproduction apparatus 10 is used as an image output apparatus of the present invention in the first embodiment, the image output apparatus is not limited thereto. The image output apparatus may be any apparatus that can output image information, including a DVD recording apparatus, a personal computer, a video tape replay apparatus, a video tape recorder (VTR) , a video camera, a digital camera, a tuner for television, a tuner for cable television, an equipment connected to a home television set to provide additional functions (set top box), an output equipment for games and the like.

Though the HDMI monitor 40 is used as a display apparatus of the present invention in the first embodiment, the display apparatus is not limited thereto. The display apparatus may be any apparatus that can display an image, including a DVI monitor display apparatus based on the DVI standard, an analog monitor/display apparatus, a television image receiver, a display of a personal computer and the like.

Though image information is outputted to the analog monitor 50 as an analog signal when connection between the DVD reproduction apparatus 10 and the HDMI monitor 40 is cut in the first embodiment, this is not limiting.

For example, when the DVD reproduction apparatus 10 and the HDMI monitor 40 are connected to each other, the image information may be outputted to the HDMI monitor 40 and the analog monitor 50 at the same time in accordance with the conditions information set for the HDMI monitor 40.

Specifically, if the HDMI monitor 40 and the DVD reproduction apparatus 10 are connected to each other, the CPU 17 instructs the information conversion section 14 to send image information converted in accordance with the display conditions of the HDMI monitor 40 to the HDMI sending section 15 as well as to the video encoder 19.

Though the signal reading section 11 reads marks and spaces of image information from the DVD recording medium 60 in the first embodiment, this is not limiting. The image information to be outputted to the display apparatus may be directly read as digital signals or analog signals instead of marks and spaces. Such reading method can be appropriately selected according to forms of input into an image output apparatus, such as a DVD recording medium, a video tape, wired communication, wireless communication, broadcasting and the like.

Though the GUI generation section 132 sends information to the effect that display conditions should be displayed so that the received display conditions information is to be displayed on the HDMI monitor 40, to the image quality adjustment section 141 in the first embodiment, it is not limiting to display GUI image information in this way. For example, the GUI generation section 132 may display the received display conditions information on a display section (not shown) of the DVD reproduction apparatus 10.

Though the information conversion section 14 is configured to convert image quality, image display format and resolution as display conditions in the first embodiment, the number of pixels, the aspect ratio and the like may be used as the display conditions. In this case, the information conversion section 14 is provided with a component member for converting each of the display conditions such as the number of pixels, the aspect ratio and the like.

Though the HDMI sending section 15 sends a signal of converted image information based on the HDMI standard in the first embodiment, the operation is not limited thereto. For example, the HDMI sending section 15 may be adapted to send a signal of converted image information based on the DVI standard. The HDMI sending section 15 may convert image information into an analog signal and send the image information converted into an analog signal directly to the analog monitor 50.

In the first embodiment, the user of the DVD reproduction apparatus 10 uses the operation section 16 to directly operate it, this operation is not limiting. For example, when a remote controller is used for operation by the user, the operation section 16 may receive a signal of the contents of the operation and send it to the CPU 17.

Though the CPU 17 acquires, from an HDMI monitor 40, conditions information which is information indicating the display conditions of the HDMI monitor 40 as an EDID data structure via the DDC in the first embodiment, this is not limiting. For example, the CPU 17 may acquire the conditions information as a different data structure. Alternatively, the CPU 17 may acquire the conditions information as a digital signal or an analog signal.

Furthermore, by recording a program corresponding to the flowcharts in FIGs. 5 and 6 to an information recording medium such as a flexible disk and a hard disk or acquiring the program via a network such as the Internet to record it, and then reading and executing the program by a microcomputer and the like, it is possible to cause the microcomputer to function as the CPU 17, the information conversion section 14, the HDMI sending section 15 and the like according to each embodiment.

As described above, the image output program of this embodiment and an information recording medium in which the image output program is recorded so that it can be read by a computer cause the computer included in a DVD reproduction apparatus 10 which is connected to an HDMI monitor 40 that displays image information and which outputs the image information to the HDMI monitor 40 to function as: a CPU 17 which acquires conditions information indicating display conditions of the HDMI monitor 40 from the HDMI monitor 40 in advance; an information conversion section 14 which converts image information to be outputted to the HDMI monitor 40 based on the conditions information; and an HDMI sending section 15 which outputs converted image information, image information converted by the information conversion section 14, to the HDMI monitor 40.

The computer included in the DVD reproduction apparatus 10 functions as described above. Therefore, even if a new HDMI monitor 40 is connected, the DVD reproduction apparatus 10 can acquire display conditions information from the newly connected HDMI monitor 40. Accordingly, the DVD reproduction apparatus 10 can output image information under display conditions suitable for the connected HDMI monitor 40, based on the acquired display conditions information. Accordingly, even if a new HDMI monitor 40 is connected to the DVD reproduction apparatus 10, the user can output image information under suitable display conditions without necessity to change settings for display conditions for image information, and thereby the convenience of the DVD reproduction apparatus 10 for the user is improved.

Though the DVD reproduction apparatus 10 as an image output apparatus has a CPU 17 and the CPU 17 controls each component member of the DVD reproduction apparatus 10 in the DVD image display system 100 of the first embodiment, this configuration is not limiting.

For example, the DVD image display system 100 may comprise an HDMI monitor 40 which displays image information, a DVD reproduction apparatus 10 which is connected to the HDMI monitor 40 and which outputs image information to the HDMI monitor 40, and an image output control apparatus 80 which controls the DVD reproduction apparatus 10.

In this case, the image output control apparatus 80 comprises a system control section 817 having the functions of the CPU 17 provided for the DVD reproduction apparatus 10 of the first embodiment has, and a main memory section 818 having the functions of the storage section 18 similarly provided for the DVD reproduction apparatus 10.

This system control section 817 controls the signal processing section 12, the AV decoder 13, the information conversion section 14 and the HDMI sending section 15 of the DVD reproduction apparatus 10. Specifically, the system control section 817 acquires, from an HDMI monitor 40, conditions information which indicates the display conditions of the HDMI monitor 40 via DDC communication in advance, and causes image information, which is to be outputted to the HDMI monitor 40, to be converted based on the conditions information. Furthermore, the system control section 817 is connected to each component member of the DVD reproduction apparatus 10 via the communication line within the DVD reproduction apparatus 10 to exercise these functions. The system control section 817 functions as an acquisition device and a conversion control device of this invention, for example.

Accordingly, similarly to the first embodiment, even if a new HDMI monitor 40 is connected to the DVD reproduction apparatus 10, the user can output image information under suitable display conditions without necessity to change settings for the display conditions for image information, and thereby the convenience of the DVD reproduction apparatus 10 for the user is improved.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An image output apparatus (10) which is connected to a display apparatus (40) that displays image information and which outputs the image information to the display apparatus (40), **characterized in that** the image output apparatus (10) comprises:
an acquisition device (17) which acquires conditions information indicating display conditions of the display apparatus (40) from the display apparatus (40) in advance;
a conversion device (14) which converts the image information to be outputted to the display apparatus (40) based on the conditions information; and
an output device (15) which outputs the image information converted by the conversion device (14), to the display apparatus (40).

2. The image output apparatus (10) according to claim 1, further comprising:
a storage device (18) which stores the conditions information acquired by the acquisition device (17), the conditions information including identification information that identifies the display apparatus (40); and
an identification device (17) which identifies the display apparatus (40) to which the image information is to be outputted based on the conditions information acquired by the acquisition device (17), wherein
based on the display apparatus (40) identified by the identification device (17), the conversion device (14) reads the conditions information suitable for the connected display apparatus (40) from the storage device (18) , and converts the image information to be outputted based on the read conditions information.

3. The image output apparatus (10) according to claim 1, wherein
the output device (15) outputs the converted image information which is formed by a digital signal.

4. The image output apparatus (10) according to claim 3, wherein
the output device (15) outputs the converted image information which is formed by an HDMI-standard signal.

5. The image output apparatus (10) according to any one of claims 1 to 4, further comprising:
a determination device (17) that determines a standard which the conditions information acquired from the display apparatus (40) by the acquisition device (17) is based on, wherein
the acquisition device (17) acquires the conditions information based on the standard determined by the determination device (17).

6. The image output apparatus (10) according to any one of claims 2 to 4, further comprising an operation device (16) which is used for an operation of changing the display conditions of the display apparatus (40), wherein
when the display conditions have been changed, the storage device (18) stores the changed display conditions as display conditions to be used for conversion into image information to be outputted.

7. The image output apparatus (10) according to claim 3 or 4, further comprising, if the storage device (18) stores display conditions before connection as display conditions before connection with the display apparatus (40) in advance:
a detection device (17) which detects that connection with the display apparatus (40) has been cut, wherein
the conversion device (14) converts the image information based on the stored display conditions before connection if the detection device (17) detects that connection with the display apparatus (40) has been cut.

8. The image output apparatus (10) according to any one of claims 1 to 4, wherein
the acquisition device (17) acquires the conditions information which includes at least one of an aspect ratio, resolution, a number of pixels, an image display format and image quality of the image information displayed on the display apparatus (40) in addition to the identification information about the display apparatus (40).

9. The image output apparatus (10) according to any one of claims 1 to 4, wherein
the display apparatus (40) further outputs voices outward based on voice information;
the acquisition device (17) further acquires the conditions information which includes voice conditions of the display apparatus (40);
the conversion device (14) converts the voice information to be outputted to the display apparatus (40) based on the conditions information; and
the output device (15) outputs the converted voice information, which is the voice information converted by the conversion device (14), to the display apparatus (40).

10. The image output apparatus (10) according to claim 9, wherein
the operation device (16) is used for an operation of changing the voice conditions.

11. An image display system (100) comprising a display apparatus (40) which displays image information and an image output apparatus (10) which is connected to the display apparatus (40) and which outputs the image information to the display apparatus (40), **characterized in that** the image display system (100) comprises:
an acquisition device (17) which acquires conditions information indicating display conditions of the display apparatus (40) from the display apparatus (40) in advance;
a conversion device (14) which converts the image information to be outputted to the display apparatus (40) based on the conditions information; and
an output device (15) which outputs the image information converted by the conversion device (14), to the display apparatus (40), wherein
the display apparatus (40) displays the image information in accordance with the converted image information outputted from the image output apparatus (10).

12. The image display system (100) according to claim 11, wherein
if a plurality of the display apparatuses (40A, 40B) are provided, there is provided a selection device (31) which selects at least one of the display apparatuses (40A, 40B) between the image output apparatus (10) and each of the display apparatuses (40A, 40B).

13. An image output method which outputs image information to a display apparatus (40) which displays the image information, **characterized in that** the image output method comprises:
an acquisition process which acquires conditions information indicating display conditions of the display apparatus (40) from the display apparatus (40) in advance;
a conversion process which converts the image information to be outputted to the display apparatus (40) based on the conditions information; and
an output process which outputs the image information converted by the conversion process, to the display apparatus (40).

14. An information recording medium in which an image output program is recorded so that it can be read by a computer included in an image output apparatus (10) which is connected to a display apparatus (40) that displays image information and which outputs the image information to the display apparatus (40), **characterized in that** the image output program causes the computer to function as:
an acquisition device (17) which acquires conditions information indicating display conditions of the display apparatus (40) from the display apparatus (40) in advance;
a conversion device (14) which converts image information to be outputted to the display apparatus (40) based on the conditions information; and
an output device (15) which outputs the image information converted by the conversion device (14), to the display apparatus (40).

15. An image output control apparatus (80) which controls an image output apparatus (10) which is connected to a display apparatus (40) that displays image information and which outputs the image information to the display apparatus (40), **characterized in that** the image output control apparatus (80) comprises:
an acquisition device (817) which acquires conditions information indicating display conditions of the display apparatus (40) from the display apparatus (40) in advance; and
a conversion control device (817) which causes the image information, which is to be outputted to the display apparatus (40), to be converted based on the conditions information.

16. An image output control method which controls an image output apparatus (10) which is connected to a display apparatus (40) that displays image information and which outputs the image information to the display apparatus (40) , **characterized in that** the image output control method comprises:
an acquisition process which acquires conditions information indicating display conditions of the display apparatus (40) from the display apparatus (40) in advance; and
a conversion control process which causes the image information, which is to be outputted to the display apparatus (40), to be converted based on the conditions information.

17. An information recording medium in which an image output control program is recorded so that it can be read by a computer included in an image output control apparatus (80) that controls an image output apparatus (10) which is connected to a display apparatus (40) that displays image information and which outputs the image information to the display apparatus (40), **characterized in that** the image output program causes the computer to function as:
an acquisition device (817) which acquires conditions information indicating display conditions of the display apparatus (40) from the display apparatus (40) in advance; and
a conversion control device (817) which causes image information, which is to be outputted to the display apparatus (40), to be converted based on the conditions information.
